# EUROPEAN PATENT APPLICATION

(11) **EP 4 428 071 A1**
(43) Date of publication of application: **11.09.2024**
(21) Application number: 23382212.1
(22) Date of filing: 07.03.2023
(51) Int. Cl.: B65G 49/06, B41J 11/00

(54) **SYNCHRONISED DRIVE METHOD AND SYSTEM**

(71) Applicant: Barberan S.A., 08860 Castelldefels (Barcelona) (ES)
(72) Inventor: AZNAR MARZO, ADRIAN, 08860 Castelldefels (Barcelona) (ES); BARBERAN LATORRE, JESUS FRANCISCO, 08860 Castelldefels (Barcelona) (ES)
(74) Representative: Plasseraud IP

(57) **Abstract**

The invention relates to a synchronised drive method and system for at least one processing device (1, 1.1, 1.2, 1.3) of a substrate (S) that is displaced by a means of transport (10, 11, 12). The method comprises: obtaining a position signal (*s̅*₀) by means of an encoder (3), said signal providing a position associated with the displacement of the substrate (S) and/or means of transport (10, 11, 12) at each instant; and driving a processing device (1; 1.1, 1.2, 1.3) when the position from a positioning point (Pp) through which the substrate (S) passes, said position provided by the position signal (*s̅*₀), takes a given drive position value (*V*₀). The method is characterised in that it further comprises: measuring, and/or obtaining data on, physical and/or kinematic characteristics of the substrate (S) and/or of the means of transport (10, 11, 12) related to displacement; and correcting the position signal (*s̅*₀; *s̅*; *s̅'; s̅_{A}, s̅_{B}, s̅_{C}*) and/or the drive position value (*V*₀; *V; V'; V_{A}, V_{B}, V_{C}*)*,* based on the measurement or data obtained, to drive the processing device (1; 1.1, 1.2, 1.3).

## Description

### Technical field

The present invention relates to a synchronised drive method and system for substrate processing devices, such as panels, wherein the substrates are displaced relative to the processing devices by a means of transport, such as a conveyor belt or a roller conveyor.

These drive methods and systems allow actions to be performed on the substrates by means of processing devices, such as digital printing, coating, cutting, stamping or engraving, synchronously with the displacement of the substrates.

The present invention is particularly applicable to the industry of substrate digital printing, likewise relating to a digital printing machine that comprises a synchronised drive system.

### State of the art

Synchronised drive methods and systems for substrate processing devices that use a position signal obtained by encoders are currently well known. The position signal provides a position associated with the displacement of the substrates at each instant.

Rotary encoders are used in the means of transport made up of a conveyor belt or a roller conveyor. The rotary encoders are functionally coupled to the rotation shaft of a conveyor belt feed roller or of a roller conveyor. These encoders provide an angular position of said rotation shaft, which is related to the position of the displacement of the substrate and/or of the means of transport.

To drive the processing device synchronously with the displacement of a substrate, the processing device is driven when the position associated with the displacement, provided by the position signal, from a positioning point through which the substrate passes, takes a given drive position value.

This drive position value is predetermined in correspondence with the distance between the positioning point and a drive point at which the processing device should perform the action on the substrate.

Known synchronised drive methods and systems have the disadvantage that they do not allow optimal precision when performing the synchronised action on the substrate, either due to a delay or an advance with respect to the instant of nominal implementation and/or a mislocation with respect to the nominal location on the substrate of the performed action, which can occur erroneously.

This drawback is especially relevant in substrate digital printing methods and systems, which seek to provide high printing speeds with high print resolutions.

Increasing the print resolution in digital inkjet printers is possible by using print heads that eject smaller volume ink drops, which allows the number of pixels per print area to be increased.

It is also possible to increase the print resolution in single-pass digital inkjet printers by reducing the printing speed, which allows the number of inkjet drop firings per unit length to be increased along the direction of displacement of the substrate, and therefore the number of pixels per print unit length along said direction.

In this sense, an improvement in synchronisation precision in the known substrate digital inkjet printing methods and systems is desirable. This improvement in synchronisation precision has a direct impact on an improvement in print resolution. This is due to the fact that increasing the number of pixels per print area or per unit length along the direction of displacement of the substrate, in order to obtain higher print resolution at a given printing speed, requires higher synchronisation precision to avoid delays or advances in the instant of ejection of the print drops and/or mislocations of the ejected drops on the substrate.

Patent document WO 2021/146595 A1 discloses a synchronised drive system for substrate processing devices that are displaced by means of a conveyor belt for substrate digital printing. To increase synchronisation precision, the system incorporates an improved encoder compared to purely rotary encoders, comprising an encoder strip moved by two rollers and positioned in contact on the conveyor belt. However, this encoder has the drawback of its constructive complexity which is transferred to the system.

In view of the described disadvantage or limitation of currently existing solutions, there needs to be a solution that allows the synchronisation precision provided by the synchronised drive methods and systems for known substrate processing devices to be increased, while at the same time allowing a simple implementation or construction, minimally modifying the known synchronised drive methods and systems.

### Object of the invention

In order to achieve this objective and solve the technical problems discussed so far, in addition to providing additional advantages that can be derived later, the present invention provides a synchronised drive method for at least one substrate processing device when the substrate is displaced by a means of transport.

The method comprises: obtaining a position signal by means of an encoder, said signal providing a position associated with the displacement of the substrate and/or means of transport at each instant; and driving a processing device when the position provided by the position signal from a positioning point through which the substrate passes takes a given drive position value.

According to the invention, the method further comprises: measuring, and/or obtaining data on, physical and/or kinematic characteristics of the substrate and/or of the means of transport related to displacement; and correcting the position signal and/or the drive position value, based on the measurement or data obtained, to drive the processing device.

Thus, once the position signal and/or the drive position value has been corrected, the processing device is driven when the position from the positioning point provided by the corrected position signal takes the uncorrected drive position value and/or when the position from the positioning point provided by the uncorrected position signal takes the corrected drive position value.

Position associated with the displacement of the substrate and/or means of transport is understood to be, in particular, a position of a mobile element, in particular, of the substrate and/or means of transport, such as the substrate itself, the band of a conveyor belt, the rotation shaft corresponding to a feed roller of the band, the rotation shaft of a roller of a roller conveyor, etc., such that it is related to the position of the substrate and/or means of transport in its displacement.

The position associated with the displacement is provided by a position signal generated by a position encoder, in a manner known per se. In particular, the encoder is functionally coupled to said mobile element, which movement is related to the displacement of the substrate and/or means of transport. The encoder can be, for example, linear or rotary.

For example, in the case of a means of transport made up of a conveyor belt or roller conveyor of the substrate, a rotary encoder can be used that is functionally coupled to the rotation shaft of a feed roller of the band or of a conveyor roller, which makes it possible to obtain a position signal that provides a position associated with the displacement through the angular position of the rotation of said shaft.

The uncorrected drive position value is a predetermined value that corresponds to the value of the position provided by the uncorrected position signal from the positioning point so that the processing device may be driven when the substrate has been displaced a fixed distance from said point.

Since the position associated with the displacement, provided by the position signal generated by the encoder, is related to the displacement of the substrate and/or means of transport, the uncorrected drive position value can be obtained from said relationship constituted by, for example, a theoretical function, such as a kinematic function, which relates the variation of the position provided by the position signal to the distance of displacement of the substrate between two points.

Unlike known synchronised drive methods, in the synchronised drive method according to the invention the position signal and/or the drive position value are corrected. Synchronisation precision can be increased by means of the correction, since the correction makes it possible to take into account factors that have an effect on the actual displacement of the substrate and/or means of transport which are not considered if an uncorrected position signal and an uncorrected drive value are used like in the state of the art.

In this regard, the applicant has found that, as a result of the fact that a theoretical relationship between the position associated with the displacement and the actual displacement of the substrate and/or means of transport is involved in the synchronised drive method, which determines the uncorrected drive position value, the use of this theoretical relationship per se can constitute a considerable source of precision errors. Precision errors are introduced as a result of hypotheses that need to be formulated to define the theoretical relationship.

Thus, the applicant has observed that, for example, in the event that the means of transport is made up of a conveyor belt, having a rotary encoder functionally coupled to the rotation shaft of a feed roller of the band, there can be, in particular, both slippage between the shaft and encoder and/or between the band and roller and/or between the substrate and band, as well as deformations of the band itself, which introduce precision errors that are not taken into account in the methods of the state of the art.

Moreover, it has been observed that these behaviours depend on the utilisation scheme of the system, in particular, for example, on the substrate load, displacement speed, continuous operation time, etc. For this reason, it is not possible to take such behaviour into account with the synchronised drive methods of the state of the art, since the drive position value remains constant. Unlike the synchronised drive methods of the state of the art, in the present invention said behaviours can be taken into account by being able to dynamically vary the correction of the position signal and/or of the drive position value during the use of the system.

In fact, it has been observed that when the displacement speed increases or the substrate load increases, these behaviours become increasingly noticeable.

According to another aspect, the present invention also relates to a synchronised drive system for at least one processing device of a substrate that is displaced relative to the devices by a means of transport. The system is configured to perform a synchronised drive method as described herein. In this sense, everything indicated for the synchronised drive method according to the invention is applicable to the system and vice versa.

The system according to the invention comprises: means for measuring, and/or obtaining data on, physical and/or kinematic characteristics of the substrate and/or of the means of transport related to the displacement; and a control device that is operationally connected to an encoder to obtain a position signal, to means for detecting the passage of the substrates through a positioning point, to the means for measuring, and/or obtaining data on, physical and/or kinematic characteristics of the substrate and/or of the means of transport related to the displacement, and to the processing devices.

The means for detecting the passage of the substrates through a positioning point comprise, in particular, at least one detection sensor for detecting the passage of a reference element fixed to the substrate. The reference element may be attached to, or integrated into, the substrate itself, in particular, forming part of the substrate. It is contemplated, for example, that the reference element is made up of the leading edge of the substrate according to the direction of its displacement. The detection sensor can be, for example, a contrast detection sensor, in a manner known per se.

The control device is configured to carry out the synchronised drive method according to the invention. The control device comprises, in particular, at least one programmable device, for example, with FPGA programmable logic, and/or software.

As for the processing devices used in the present invention, they can be any type of device that is used to perform an action on a substrate that is displaced. For example, measuring devices, coating devices, cutting devices, stamping devices, engraving devices, digital printing devices, etc. of the substrate can be considered processing devices.

In particular, the present invention applies to processing devices that are digital inkjet printing devices that are part of, and in particular constitute, an inkjet printer, more particularly a single-pass inkjet printer. As mentioned previously, by means of the synchronised drive method for digital inkjet printing devices, it is possible to increase the printing speed of the substrates and/or increase the print resolution.

Digital printing devices comprise a plurality of print heads, which have a plurality of ink ejection nozzles arranged aligned along a direction perpendicular to displacement. In particular, digital printing devices are configured to eject drops with a volume less than or equal to 20 pL, preferably 10 pL, more preferably 5 pL, and/or to provide print resolution in the direction perpendicular to displacement greater than or equal to 360 dpi, preferably 720 dpi, more preferably 1200 dpi. This resolution is determined by the physical distance between ejection nozzles arranged in the print heads.

According to another aspect, the present invention also relates to a substrate digital printing machine comprising: an inkjet printer, in particular, a single-pass inkjet printer, which comprises the printing devices; a means of transport to displace the substrates to be printed by the inkjet printer; an encoder to obtain the position signal; and means for detecting the passage of the substrates through a positioning point.

The substrate digital printing machine according to the invention comprises a synchronised drive system for the digital printing devices as described, for the synchronised drive of the digital printing devices of the substrates (S) as they are displaced by the means of transport.

In this way, it is possible to increase the synchronisation precision provided by the synchronised drive methods and systems of known substrate processing devices, while at the same time allowing a simple implementation or construction, since it makes it possible to use the encoders without being modified with minimal construction adaptations.

### Description of the figures

The following figures are included which serve to illustrate different practical embodiments of the invention by way of example but not limitation.

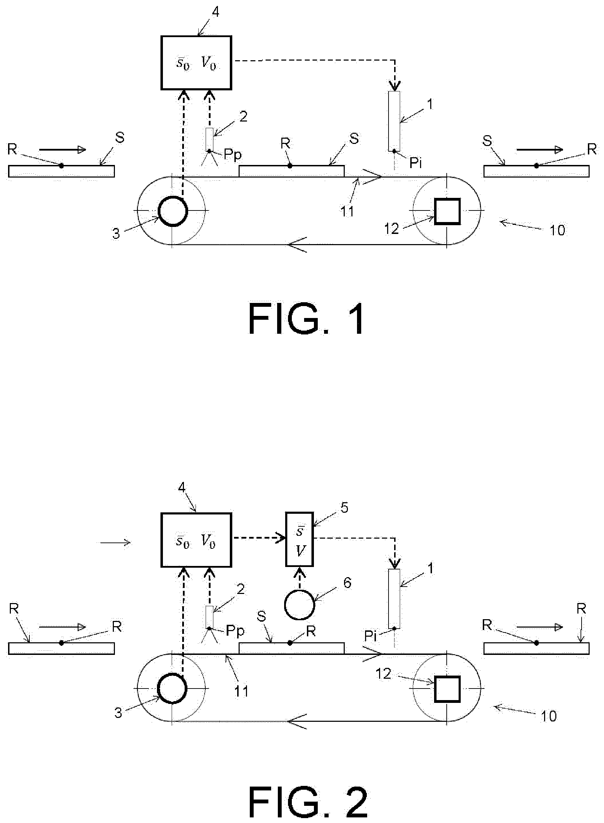

Figure 1 schematically represents an embodiment of a synchronised drive method and system according to the state of the art. This figure shows a schematic view of the system in elevation with its different components, indicating the interaction between them to carry out the method.
Figures 2 to 4 schematically represent different general embodiments of a synchronised drive method and system according to the invention. These figures show a schematic view of the system in elevation with its different components, indicating the interaction between them to carry out the method.

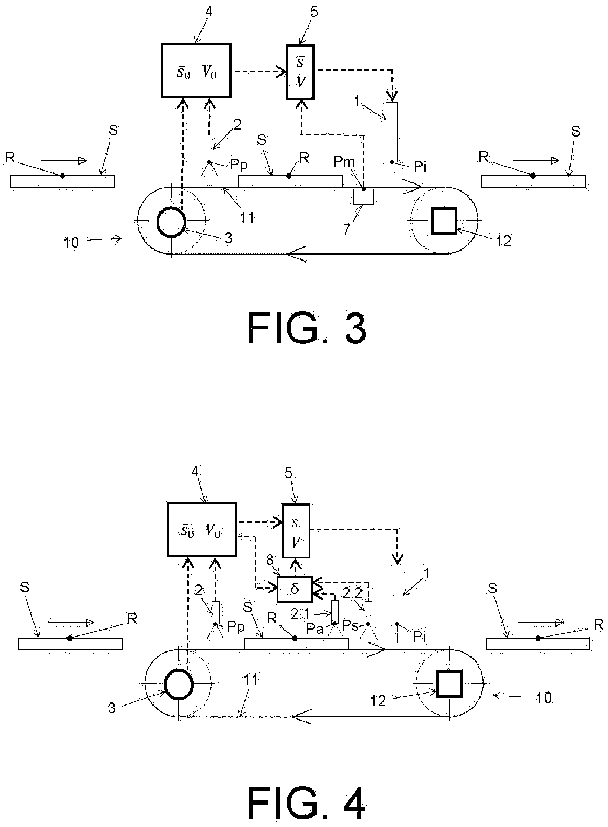

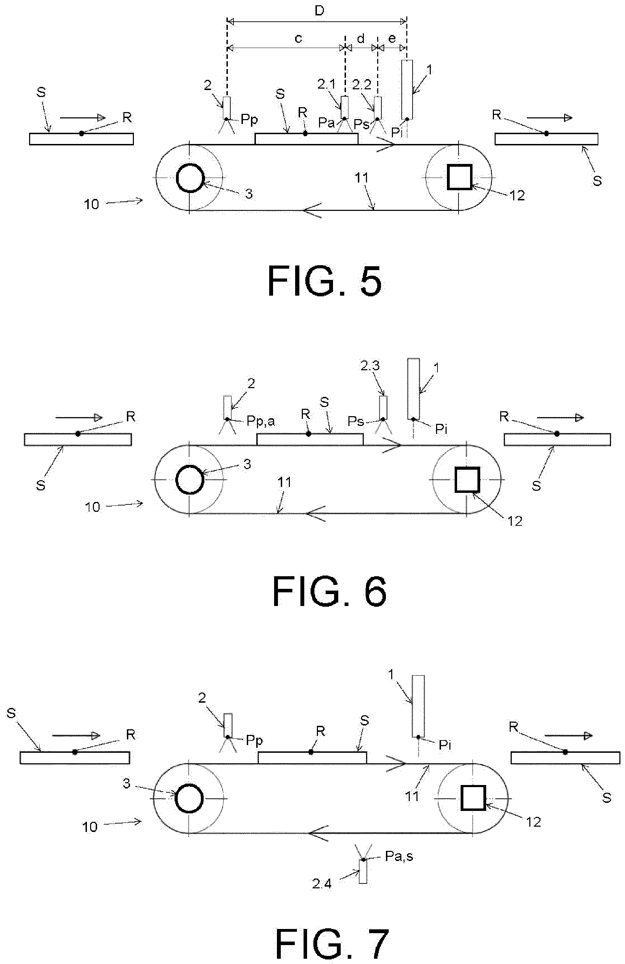

Figures 5 to 7 schematically represent different embodiments of the method and system according to the invention, which are applicable to the preferred general embodiment represented in Figure 4. Likewise, these figures show a schematic view of the system in elevation with its different components, indicating the interaction between them to carry out the method.

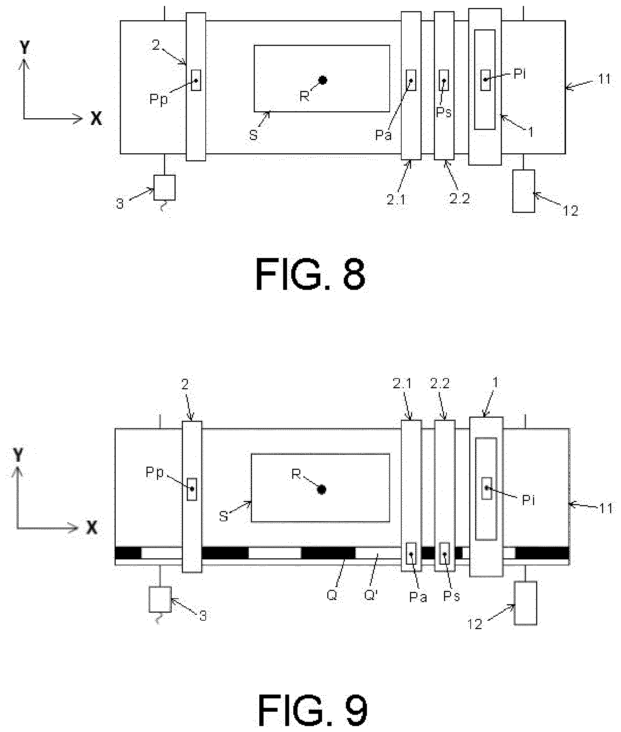

Figures 8 and 9 schematically represent different embodiments of the method and system according to the invention, which are also applicable to the embodiment shown in Figure 4 and can be combined with the different embodiments shown in Figures 5 to 7. Each of these figures shows a schematic view of the system in plan with its different components.

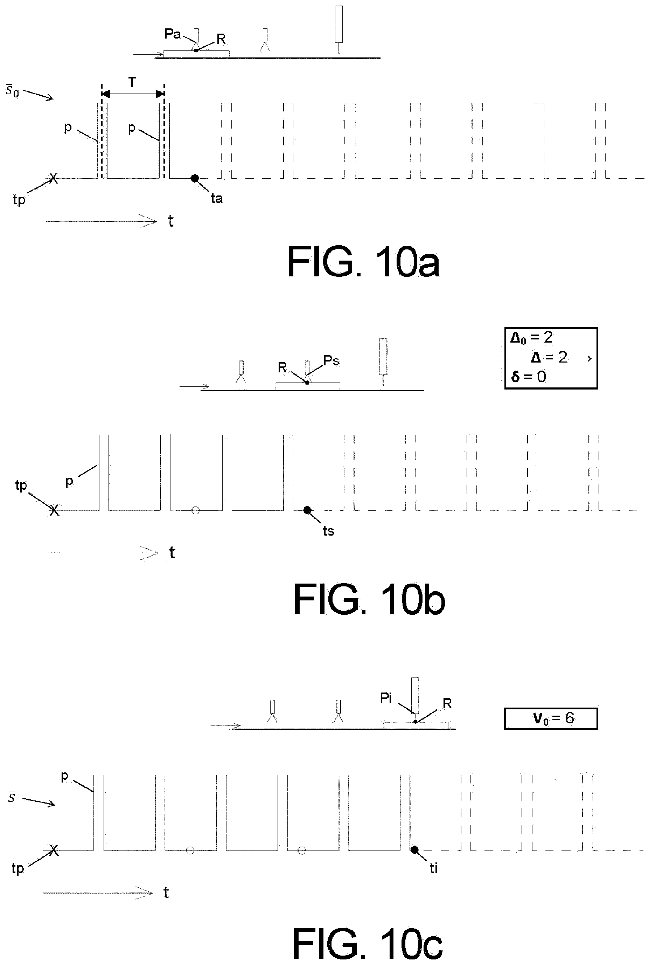

Figures 10 to 12 schematically represent an exemplary embodiment of the processing of the uncorrected and corrected position signal for the method and system according to the invention, which is applicable to the embodiment shown in Figure 4. In particular, this exemplary embodiment is applicable in combination with the different embodiments represented in Figures 4 to 9.

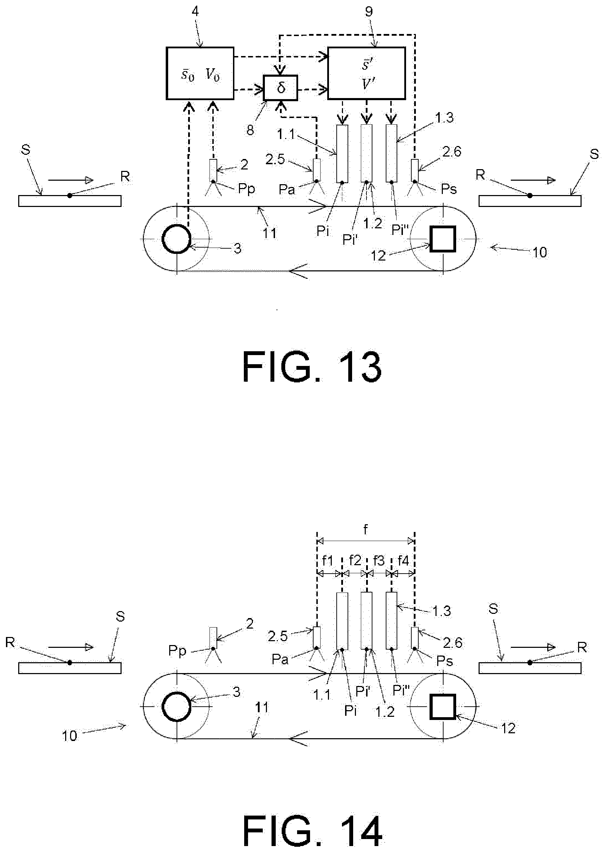

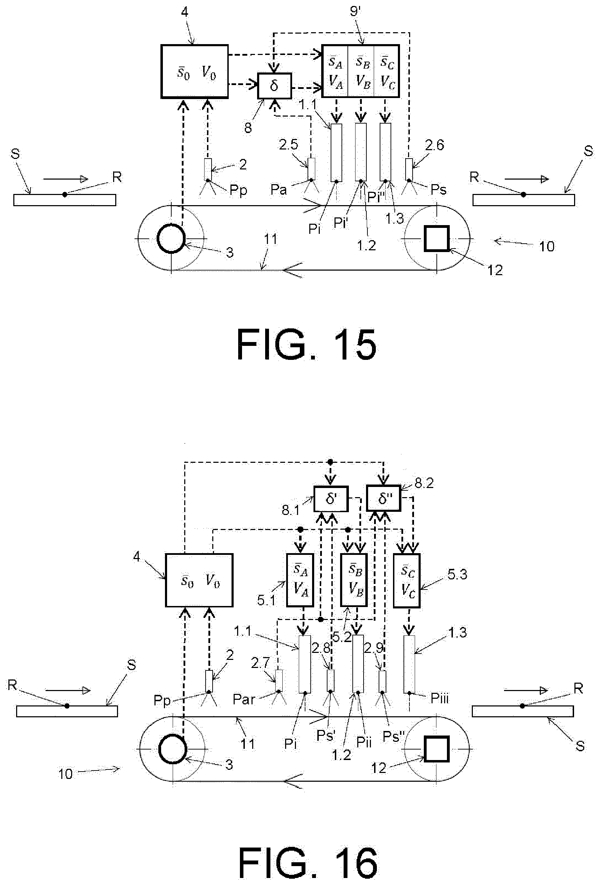

Figures 13 to 15 schematically represent another embodiment of a synchronised drive method and system according to the invention, comprising a plurality of processing devices. This embodiment constitutes a preferred particular embodiment of the preferred general embodiment represented in Figure 4. These figures show a schematic view of the system in elevation with its different components, indicating the interaction between them to carry out the method. Figure 13 and Figure 15 relate to different embodiments.
Figure 16 schematically represents another embodiment of a synchronised drive method and system according to the invention, comprising a plurality of processing devices. This embodiment also constitutes a preferred particular embodiment of the preferred general embodiment represented in Figure 4. Likewise, this figure shows a schematic view of the system in elevation with its different components, indicating the interaction between them to carry out the method.

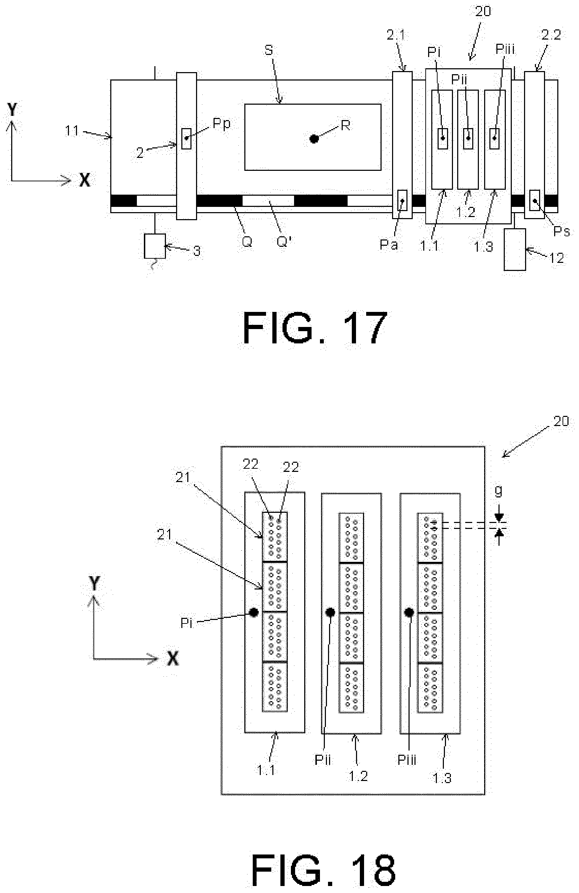

Figures 17 and 18 schematically represent different embodiments of the method and system according to the invention, which are applicable both to the embodiment represented in Figures 13 to 15 and to the embodiment represented in Figure 16. Figure 17 shows a schematic view of the system in plan with its different components. Figure 18 shows a detailed schematic view of the processing devices made up of digital printing devices that are part of a single-pass inkjet printer.

### Detailed description of the invention

Figure 1 shows a known synchronised drive method and system for synchronising a processing device (1) of a panel-shaped substrate (S), which is displaced by a means of transport (10), as shown in the figure, from left to right.

The means of transport is made up of a conveyor belt (10) comprising a band (11) or belt that supports the substrate (S) in its displacement, which moves in a closed circuit being fed by two feed rollers. A drive motor (12) is coupled to the shaft of one of the feed rollers (11) of the band and an encoder (3) is coupled to the shaft of the other feed roller.

A position signal (*s̅*₀) is obtained by means of the encoder (3), said signal providing a position associated with the displacement of the substrate (S) and/or means of transport (10) at each instant, consisting of an angular position of the rotation of the shaft of the feed roller of the band (11) to which the encoder (3) is coupled, which is related to the displacement of the substrate (S) and of the band (11).

The processing device (1) is driven at the drive point (Pi) when said angular position from a positioning point (Pp), through which a reference element (R) of the substrate (S) passes, takes a given drive position value (*V*₀). The passage of the reference element (R) through the positioning point (Pp) is detected by a detection sensor (2) for detecting the reference element (R).

The angular position is provided by the position signal (*s̅*₀). The position signal (*s̅*₀) and the drive position value (*V*₀) are processed in a position obtaining module (4), which is part of a control device of the system.

The position obtaining module (4) of the processing device is operationally connected to the processing device (1), to the detection sensor (2) and to the encoder (3), to carry out the synchronised drive method of the substrate (S) by the processing device (1).

As shown, in particular, in Figures 2 to 4, unlike the state of the art, according to the invention the method comprises: measuring, and/or obtaining data on, physical and/or kinematic characteristics of the substrate (S) and/or of the means of transport (10) related to the displacement; and correcting the position signal (*s̅*₀; *s̅*) and/or the drive position value (*V*₀; *V*) based on the measurement or data obtained, to drive the processing device (1).

The uncorrected position signal (*s̅*₀), obtained from the encoder (3), and/or the uncorrected drive position value (*V*₀), processed in the position obtaining module (4) of the control device, are corrected to obtain the corrected position signal (*s̅*) and/or the corrected drive position value (V). This correction is carried out in a position correction module (5) which, together with the position obtaining module (4), is part of a control device of the system.

The position obtaining module (4) and position correction module (5) of the control device are operationally connected to each other and to the processing device (1), to the detection sensor (2), to the encoder (3) and to means for measuring (2.1, 2.2; 7), and/or means for obtaining data (6) on, physical and/or kinematic characteristics of the substrate (S) and/or of the means of transport (10) related to the displacement, to carry out the synchronised drive method of the substrate (S) by means of the processing device (1).

As shown in Figure 2, it is contemplated that the means for obtaining data on physical and/or kinematic characteristics of the substrate (S) and/or of the means of transport (10) related to displacement comprise, for example, a data log (6) for storing and/or processing said data.

As shown in Figure 3, it is contemplated that the means for measuring physical and/or kinematic characteristics of the substrate (S) and/or of the means of transport (10) related to displacement comprise, for example, a measurement sensor (7) such as, for example, a speed sensor for the band (11) and/or for the substrate (S) when passing through a measurement point (Pm). Similarly, any type of sensor can be used to measure, for example, physical characteristics, such as the weight of the substrate, or other kinematic characteristics, such as the acceleration, of the band and/or of the substrate (S) at the measurement point (Pm).

The measurements and/or data obtained are used to correct the position signal (*s̅*₀; *s̅*), or the drive position value (*V*₀; *V),* in the position correction module (5) of the system control device. The correction can be carried out, for example, based on a modification or adjustment of the theoretical relationship between the position associated with the displacement, which is obtained by the encoder (3), and the real position of the displacement of the substrate (S) and/or band (11) of the means of transport (10). Thus, for example, if the band (11) moves at a constant nominal displacement speed, this speed, which has an effect on determining the uncorrected drive position value (*V*₀), allows the drive position value (*V*₀) to be corrected in real time based on the measured speed of the band (11) or of the substrate (S) at the measurement point (Pm).

Referring now to Figures 4 to 9, the method according to the invention comprises obtaining a variation (Δ) in the position between a previous point of passage (Pa) and a subsequent point of passage (Ps), position which is provided by the uncorrected position signal (*s̅*₀), by detecting the passage of a reference element (R; Q, Q'), fixed to the substrate (S) and/or to the means of transport (10), in particular to the band (11), through said points of passage (Pa, Ps).

According to the invention, the correction of the position signal (*s̅*₀; *s̅*) and/or of the drive position value (*V*₀; *V)* is carried out based on said variation (Δ). For example, this variation (Δ) in the position can be used to estimate the displacement speed of the band (11) between the previous point of passage (Pa) and subsequent point of passage (Ps), so that a constant nominal speed that determines the uncorrected drive position value (*V*₀) can be adjusted and thereby obtain the corrected drive position value (7).

As shown in Figures 4 to 9, it is contemplated that the means for measuring physical and/or kinematic characteristics of the substrate (S) and/or of the means of transport (10) related to displacement comprise, for example, at least one detection sensor (2, 2.1, 2.2; 2.3; 2.4) for detecting the passage, through the points of passage (Pa, Ps), of a reference element (R; Q; Q') fixed to the substrate (S) and/or to the means of transport (10), in particular to the band (11) of the conveyor belt (10).

Obtaining the variation (Δ) in the position between the points of passage (Pa, Ps) is carried out by means of a position variation obtaining module (8) that is part of the system control device. This module (8) is operationally connected to the detection sensors (2, 2.1, 2.2, 2.3, 2.4), to the position obtaining module (4) and to the position correction module (5).

As can be seen, in particular, in Figure 4. The position variation obtaining module (8) acquires the position, provided by the uncorrected position signal (*s̅*₀), of the position obtaining module (4), for the instant at which the reference element (R; Q; Q'), of the substrate (S) and/or of the means of transport (10), passes through respective points of passage (Pa, Ps), which is detected by the respective detection sensors (2, 2.1, 2.2, 2.3, 2.4). This same module (8) calculates the variation (Δ) by subtracting the position of the previous point of passage (Pa) from the position of the subsequent point of passage (Ps). The variation (Δ) is transferred to the position correction module (5) in order to, based on same, correct the position signal (*s̅*₀; *s̅*) and/or the drive position value (*V*₀; *V),* which is communicated to the processing device (1) for its synchronised drive at the drive point (Pi).

Preferably according to the invention, the correction of the position signal (*s̅*₀; *s̅*) and/or of the drive position value (*V*₀; *V)* based on the variation (Δ) comprises obtaining a difference (δ) between a reference variation value (Δo) of the position between the points of passage (Pa, Ps) and the variation (Δ) in the measured position, such that the corrected position signal (*s̅*) is obtained by adding the difference (δ) to the uncorrected position signal (*s̅*₀) and/or the corrected drive position value (*V*) is obtained by subtracting the difference (δ) from the uncorrected drive position value (*V*₀).

Obtaining the difference (δ) can be carried out in the position variation obtaining module (8), as shown, in particular, in Figure 4. The difference (δ) calculated by the module (8) between the reference variation value (Δo) and the variation (Δ) in the measured position is transferred to the position correction module (5) in order to, based on same, correct the position signal (*s̅*₀; *s̅*) and/or the drive position value (*V*₀; *V),* which is communicated to the processing device (1) for its synchronised drive at the drive point (Pi).

This embodiment according to the invention, wherein the correction of the position signal (*s̅*₀; *s̅*) and/or of the drive position value (*V*₀; *V)* is carried out by a difference (δ) applied directly (by addition or subtraction) to the uncorrected position signal (*s̅*₀) and/or to the uncorrected drive position value (*V*₀), in addition to its simple implementation, has the advantage that the introduction of calculation errors in its treatment is minimised, as it does not require additional mathematical operations other than addition or subtraction.

The reference variation value (Δ₀) can be obtained, for example, theoretically by means of a theoretical function, in particular a kinematic function, that relates the variation of the position associated with the displacement, obtained by means of the uncorrected position signal (*s̅*₀), with the distance between the points of passage (Pa, Ps). In particular, the same theoretical or kinematic function that is used to calculate the uncorrected drive position value (*V*₀) for the distance between the positioning point and the drive device (1), for example, the drive point (Pi), can be used.

The reference variation value (Δ₀), as well as the uncorrected drive position value (*V*₀), represent the incremental position values that, for an ideal behaviour of the system (without slippage or deformations that cause precision errors in the synchronisation), would correspond exactly to the distance between the points at which the position is detected, in other words, between the previous point (Pa) and the subsequent point (Ps) for the reference variation value (Δ₀), and between the positioning point (Pp) and the drive point (Pi) for the drive position value (*V*₀). In this way, the synchronised drive method and system according to the invention is capable of capturing the error to be corrected.

In the context of the invention, distance between points is understood to generally refer to the distance in a direction of displacement or a straight or curvilinear path of displacement. In this sense, in general, when it is indicated that two points are not distanced, or are not apart, it is understood that their projection in the direction of displacement, or along the path of displacement, coincides or, in particular, that the points coincide with each other, i.e., they are the same point. In the embodiments represented in the figures, the direction of displacement is the direction indicated by the X-axis (see Figures 8, 9, 17 and 18).

Regarding the arrangement of the points of passage (Pa, Ps), it is contemplated that, preferably, the previous point of passage (Pa) is arranged substantially close to or not distant from the positioning point (Pp) and/or the subsequent point of passage (Ps) or the measurement point (Pm) is arranged substantially close to or not distant from the processing device (1; 1.1, 1.2, 1.3), in particular from the drive point (Pi).

Preferably, the previous point of passage (Pa) is arranged after the positioning point (Pp) and/or the subsequent point of passage (Ps) is arranged before the processing device (1). In this way, the correction for each substrate (S) can be carried out in real time, after the passage of the reference element (R) of the substrate through the subsequent point of passage (Ps) and before the drive at the drive point (Pi).

In the context of the invention, substantially close positioning, measurement, passage or drive points is understood to mean that the respective measuring means, in particular detection sensors, or processing devices are arranged physically and substantially adjacent along the direction or path of displacement and/or that the distance between them is not substantially greater than the distance necessary so that, due to electronic processing constraints of the control device, it allows time to apply the corrected position signal (*s̅*) and/or the corrected drive position value (*V*) to the processing device (1) after the reference element (R) of the substrate (S) has passed through the subsequent point of passage (Ps).

In this sense, referring to Figure 5, the distance (e) between the subsequent point of passage (Ps) and the processing device (1), in particular the drive point (Pi), can be less than 10% of the distance (D) between the positioning point (Pp) and the processing device (1) or the drive point (Pi), preferably less than 5%, more preferably less than 1%. Likewise, the distance (c) between the positioning point (Pp) and the previous point of passage (Pa) can be less than 10% of the distance (D) between the positioning point (Pp) and the processing device (1) or the drive point (Pi), preferably less than 5%, more preferably less than 1%.

The proximity of the previous points of passage to the positioning point and the subsequent points of passage to the drive point makes it possible to maximise the distance (d) between the points of passage (Pa, Ps) and therefore the length of location of synchronisation errors along the displacement, substantially spanning the entire length of displacement of the substrate (S) from the positioning to the drive. On the other hand, the coincidence of the points makes it possible to use the same detection sensor for them.

In Figure 6, an embodiment is represented in which the previous point of passage (Pa) is not distant from the positioning point (Pp). In Figure 7, another embodiment is represented in which the previous point of passage (Pa) is not distant from the subsequent point of passage (Ps). This embodiment of Figure 7 can be applied, for example, in systems such as the one represented in which a point of the band (11) passes through the same point (Pa,s) several times. In this sense, the invention is applicable, for example, to conveyor belts (10) with bands (11) displaced in a closed circuit, as shown in the figures, or to conveyor belts in which the band itself moves forwards and backwards passing through the same point.

Figures 8 and 9 show details of the system in plan view. These figures show particular arrangements and shapes of the reference elements (R; Q, Q').

In Figure 8, the represented panel-shaped substrate (S) incorporates a reference element (R) on its upper surface; this reference element (R) is detected by the detection sensor (2) as it passes through the positioning point (Pp), by the detection sensor (2.1) as it passes through the previous point of passage (Pa) and by the detection sensor (2.2) as it passes through the subsequent point of passage (Ps).

For simplicity, the figures show that the reference element (R) used to detect its passage through the points of passage (Pa, Ps) is the same reference element (R) as the one used to detect its passage through the positioning point (Pp). However, it is not ruled out that these reference elements (R) may be different elements or may be arranged in different locations on the substrate (S).

Preferably, the substrate (S) and/or the means of transport (10, 11, 12), in particular the band (11) of a conveyor belt (10), comprises a plurality of reference elements (R; Q, Q'). Thus, it becomes possible to correct the position signal (*s̅*₀; *s̅*) and/or the drive position value (*V*₀; *V)* more frequently, the greater the number of reference elements (R; Q, Q') that are present, by allowing different measurement values to be obtained, in particular the position associated with the displacement, the variation (Δ) or the difference (δ).

More preferably, according to the invention, it is envisaged that the plurality of reference elements (Q; Q') are part of a reference pattern (Q, Q'), fixed to the substrate (S) and/or to the means of transport (10), particularly to the band (11). The arrangement of the reference elements (Q; Q') forming a reference pattern (Q, Q') allows the reliability of the measurements to be increased by enabling more precise control of the arrangement, dimensions, distances, etc. of the reference elements that make up the pattern.

Thus, for example, in Figure 9, the band (11) incorporates a reference pattern (Q, Q') formed in this case by consecutive black (Q) and white (Q') strips that extend over the upper surface of the band (11), on one side of it and along its entire length according to the length of displacement. The reference element (Q; Q') is the flank of each strip, where the white-black colour change occurs. The detection sensors (2.1, 2.2) are contrast detection sensors that detect the change in white-black colour and therefore the reference element (Q; Q') as it passes through the points of passage (Pa, Ps). For its part, the substrate (S) incorporates a reference element (R) that is detected by the detection sensor (2) as it passes through the positioning point (Pp), as in the embodiment of Figure 8.

The reference elements and reference patterns applicable to the invention may have any shape, configuration or arrangement. The reference elements (R, Q, Q') can be fixed to, attached to, or integrated into the substrate (S) itself, in particular by forming part of the substrate, or the means of transport (10), in particular in (or on) the band (11) of a conveyor belt (10).

In particular, the reference elements of the reference patterns can be formed by motifs different from each other, for example, formed by consecutive letters or numbers. The choice of different reference elements in reference patterns makes it easier to differentiate between them when determining the specific reference element that passes through the subsequent point of passage (Ps) having passed through the previous point of passage (Pa).

Likewise, in particular, there can be a plurality of reference pattern lines (Q; Q'), such as the one represented in Figure 9, arranged parallel to each other, for example, on each side of the band, providing a larger number of measurements per unit of time.

Preferably, the method according to the invention comprises storing data associated with the measurement, for example, by means of the control device memory. In particular, the method comprises storing the position associated with the displacement, the variation (Δ) and/or the difference (δ), for different substrates (S) and/or for different reference elements (R; Q, Q') of the substrate (S) or of the means of transport (10), so that the correction of the position signal (*s̅*₀; *s̅*) and/or of the drive position value (*V*₀; *V)* is carried out based on a selection of said data, in particular, by means of a FIFO method ("First In, First Out"). With the storage, it is possible to manage the measured or obtained data regardless of the position of the substrates (S).

According to a preferred exemplary embodiment of the invention, as shown in Figures 10 to 12, the uncorrected position signal (*s̅*₀) and corrected position signal (*s̅*) are pulse signals. In this case, the position or the variation (Δ) in the position can be easily obtained by counting the number of pulses (p, p') of the signal (*s̅*₀, *s̅*). The uncorrected pulse signal (*s̅*₀) is obtained directly from the encoder, which encodes the position associated with the displacement. Advantageously, the processing of the position signals as pulse signals (*s̅*₀; *s̅*) allows its use for continuous synchronisation as a clock signal for the processing devices, as is done in digital printing.

Preferably, the corrected position signal (*s̅*) is obtained by introducing or suppressing pulses (p, p') in the uncorrected position signal (*s̅*₀), which makes it possible to correct the position signal (*s̅*₀; *s̅*) in a simple manner.

Thus, for example, if the value of the detected difference (δ) is δ=0 (Figures 10a to 10b), it is not necessary to perform any correction of the position signal (*s̅*₀) or the drive position value (*V*₀), meaning the variation in the position between the points of passage (Pa, Ps) is ideal or expected.

Figure 10a represents the uncorrected pulse signal (p) (*s̅*₀), obtained from the encoder (3). It is a signal with period T. The instant at which the reference element (R) passes through the positioning point (Pp) is represented as tp. The same figure represents the instant at which the reference element (R) passes through the previous point of passage (Pa). The dashed line indicates the signal that has not elapsed yet.

Figure 10b represents the pulse signal (*s̅*₀; *s̅*). At the instant at which the reference element (R) passes through the subsequent point of passage (Ps), which is represented as ts. As can be seen, the value of the measured variation (Δ) is Δ=2, since two pulses (p) are counted between ta and ts. Therefore, for a given reference variation value (Δo) of Δ₀=2, it turns out that δ= Δ₀-Δ=0, i.e., no pulse is inserted into the position signal or there is no correction.

The drive of the processing device takes place for a given reference drive value, in this example *V*₀=6, i.e., six pulses counted from tp. The instant at which the processing device (1) is driven at the drive point (Pi) is represented in Figure 10c as ti.

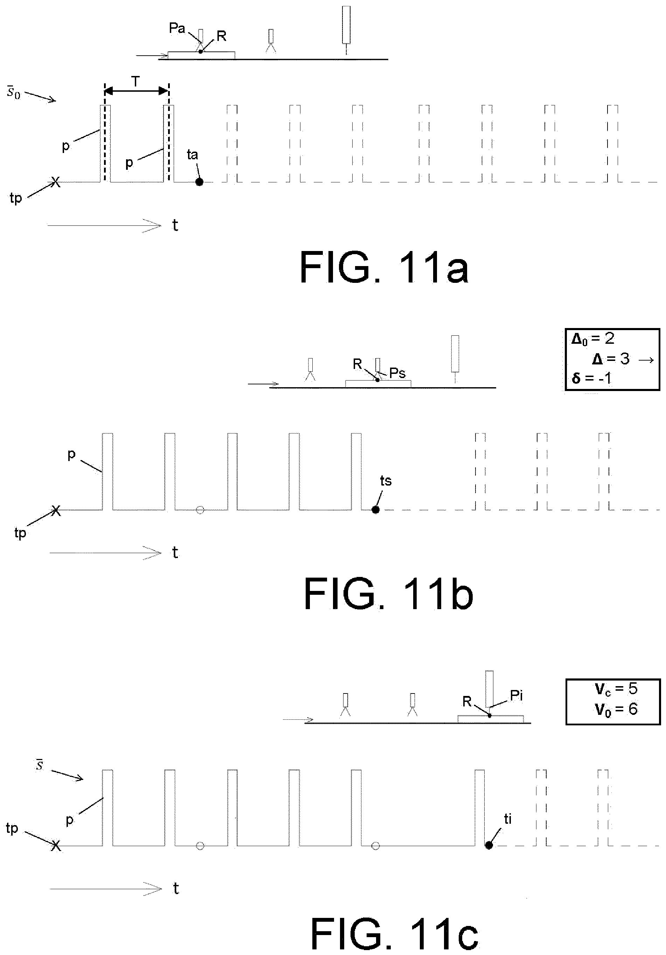

Similarly to the example represented in Figures 10a to 10c, Figures 11a to 11c represent the case in which the measured difference (δ) is δ=-1, such that the uncorrected position signal (*s̅*₀) is modified by suppressing a pulse (p) in the corrected position signal (*s̅*). As a result, since the drive position value is *V*₀=6, the processing device (1) is driven at the drive point (Pi) later than in the case represented in Figures 10a to 10c, at instant ti, delaying the performance of the action and thus increasing synchronisation precision.

Similarly to the examples represented in Figures 10a to 10c and 11a to 11c, Figures 12a to 12c represent the case in which the measured difference (δ) is δ=+1, such that the uncorrected position signal (*s̅*₀) is modified by adding a pulse (p) in the corrected position signal (*s̅*). As a result, since the drive position value is *V*₀=6, the processing device (1) is driven at the drive point (Pi) earlier than in the case represented in Figures 10a to 10c, at instant ti, bringing forward the performance of the action and thus increasing synchronisation precision.

The examples explained with reference to Figures 10 to 12 are examples in which, for a given drive position value *V*₀, what is corrected is the position signal (*s̅*₀; *s̅*), based on the measured difference (δ). However, other exemplary embodiments according to the invention are envisaged, such as, for example, that the drive position value (*V*₀; *V)* is corrected while the position signal (*s̅*₀) is not modified, simply by adding or subtracting the value of the measured difference (δ) to/from the drive position value (*V*₀).

According to a preferred embodiment according to the invention, the correction of the position signal (*s̅*₀; *s̅*) and/or of the drive position value (*V*₀; *V)* is carried out when the position from the positioning point (Pp), provided by the uncorrected position signal (*s̅*₀), takes a predetermined correction position value (*V_{c}*). In particular, this position value represents the moment at which the pulses (p, p') required for its correction are introduced into or suppressed from the uncorrected position signal.

It is envisaged that this correction position value (*V_{c}*) can be selected as a value close to and/or less than the predetermined drive position value (*V*₀). Proximate is understood to mean that the absolute value of the difference between the drive position value (*V*₀) and correction position value (*V_{c}*) is small compared to the drive position value (*V*₀) and large enough to give time to correct the position signal (*s̅*₀; *s̅*) and/or the drive position value (*V*₀; *V).*

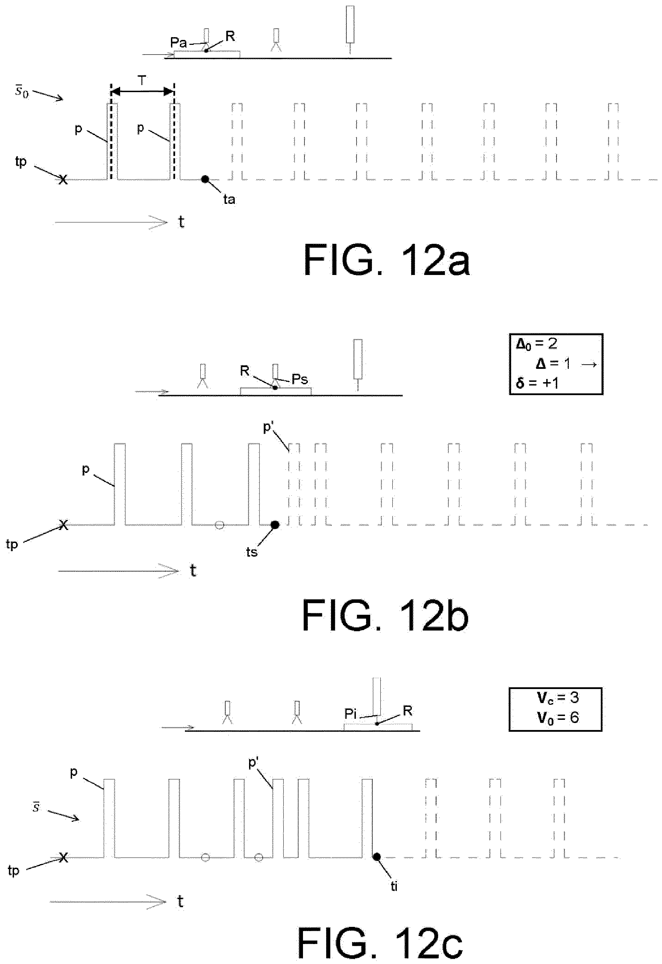

For example, as can be seen in the case represented in Figure 11, the correction position value (*V_{c}*) is *V_{c}*=5, since five pulses of the uncorrected position signal (*s̅*₀) are counted to suppress the pulse (p) of the correction. In the case represented in Figure 12, the correction position value (*V_{c}*) is *V_{c}*=3, since three pulses of the uncorrected position signal (*s̅*₀) are counted to add the pulse (p') of the correction.

Figures 13 to 18 show different embodiments of the method and system according to the invention that comprise a plurality of processing devices (1.1, 1.2, 1.3), with their respective drive points (Pi, Pi', Pi"; Pii, Piii).

Figures 17 and 18 show a digital printing machine that comprises a synchronised drive system in which the processing devices are digital inkjet printing devices (1.1, 1.2, 1.3). The digital printing devices are part of an inkjet printer (20), in particular a single-pass inkjet printer. Each digital printing device (1.1, 1.2, 1.3) comprises a plurality of print heads (21), each print head (21) having a plurality of ink ejection nozzles (22) arranged aligned along a direction (Y-axis) perpendicular to the direction of displacement (X-axis). It is contemplated that each digital printing device (1.1, 1.2, 1.3) corresponds to a print colour. The resolution of the print heads (21) along the Y-axis is determined by the distance (g) between ejection nozzles (22), so that in the configuration shown in Figure 18 the resolution is determined by half the distance (g) between nozzles.

In the embodiment shown in Figures 13 to 15, the system comprises a plurality of consecutive processing devices (1.1, 1.2, 1.3) that are associated with a single pair of points of passage (Pa, Ps). This configuration makes it possible to optimise the measuring means and the available space, especially when it is not possible to have detection sensors inserted between the processing devices (1.1, 1.2, 1.3). According to a preferred embodiment, the processing devices (1.1, 1.2, 1.3) are arranged between the points of passage (Pa, Ps).

In a first variant embodiment represented in Figures 13 and 14, the drive of the processing devices (1.1, 1.2, 1.3) is carried out by means of a common corrected position signal (*s̅*') and/or a common corrected drive position value (*V*'). For this, the system control device comprises a position obtaining module (4), a position correction module (9) and a position variation obtaining module (8), in a similar way to when there is only one processing device (1). These modules (4, 8, 9) are operationally connected to each other, to the measurement means, in particular detection sensors (2.5, 2.6), and to the processing devices (1.1, 1.2, 1.3) to apply the synchronised drive method according to the invention.

The common correction of the position signal (*s̅*₀, *s̅*') can be carried out, for example, by a rated correction, such that the difference (δ) is applied in a distributed manner along the length of displacement of the substrate as it passes through the processing devices. In particular, a number of pulses per unit length are introduced or suppressed based on the value of the measured difference (δ) and the distance (f) between the points of passage (Pa, Ps) and between the points of passage and processing devices (f1, f2, f3, f4). Similarly, the common correction of the drive position value (*V*₀; *V'*) can be carried out by a rated correction, so that the drive position value (*V*') is dynamically modified by applying the difference (δ) in a distributed manner along the length of displacement of the substrate as it passes through the processing devices.

According to a preferred embodiment according to the invention, the rated correction of the position signal (*s̅*₀, *s̅*') and/or of the drive position value (*V*₀; *V')* is carried out when the position from the positioning point (Pp), provided by the uncorrected position signal (*s̅*₀), takes a predetermined initial correction position value (*V_{ci}*) and until it takes a predetermined final correction position value (*V_{cf}*)*.* In particular, this range of correction position values (*V_{ci}*, *V_{cf}*) represents the period of time in which the pulses (p, p') required for its correction are introduced into, or suppressed from, the uncorrected position signal in a distributed manner.

In a second variant embodiment represented in Figures 14 and 15, the drive of the processing devices (1.1, 1.2, 1.3) is carried out by means of respective corrected position signals (*s̅_{A}*, *s̅_{B}, s̅_{C}*) and/or respective corrected drive position values (*V_{A}*, *V_{B}, V_{C}*). For this, the system control device comprises a position obtaining module (4), a position correction module (9') and a position variation obtaining module (8), in a similar way to when there is only one processing device (1). These modules (4, 8, 9') are operationally connected to each other, to the measurement means, in particular the detection sensors (2.5, 2.6), and to the processing devices (1.1, 1.2, 1.3) to apply the synchronised drive method according to the invention.

The correction of the position signal (*s̅*₀, *s̅_{A}, s̅_{B}, s̅_{C}*) can be carried out, for example, by means of a weighted correction, so that the difference (δ) is applied in a timely manner along the length of displacement of the substrate as it passes through the processing devices (1.1, 1.2, 1.3) but in a weighted way for each of the processing devices (1.1, 1.2, 1.3). In particular, a certain number of pulses are introduced or suppressed based on the value of the measured difference (δ) and the distance (f) between the points of passage (Pa, Ps) and between the points of passage and processing devices (f1, f2, f3, f4).

According to another embodiment according to the invention shown in Figure 16, the system comprises a plurality of consecutive processing devices (1.2, 1.3) which are associated with respective pairs of points of passage (Par, Ps'; Par, Ps"), in which the previous point of passage (Par) and/or the subsequent point of passage (Ps', Ps") is shared. In the variant embodiment shown in Figure 16, the previous point of passage (Par) corresponding to the last two processing devices (1.2, 1.3) is shared. This configuration makes it possible to optimise the measurement means and the available space, while allowing the insertion of measurement means, such as detection sensors (2.8, 2.9), in particular points of passage (Ps', Ps"), more in particular a single point of passage, between processing devices (1.2, 1.3).

The system control device comprises a position obtaining module (4), respective position correction modules (5.1, 5.2, 5.3) and respective position variation obtaining modules (8.1, 8.2), in a similar way to when there is only one processing device (1). These modules (4, 5.1, 5.2, 5.3, 8.1, 8.2) are operationally connected to each other, to the measurement means, in particular detection sensors (2.7, 2.8, 2.9), and to the processing devices (1.1, 1.2, 1.3) to apply the synchronised drive method according to the invention.

According to a preferred variant embodiment, the previous point of passage (Pa; Par) is arranged substantially close to or not distant from a preceding processing device (1.1) to at least one processing device (1.2; 1.3), more particularly, it is arranged before said preceding processing device (1.1). This configuration is fulfilled both in the embodiment of Figures 13 to 15 and in the embodiment of Figure 16, since it is the preceding processing device (1.1), i.e., arranged before the other processing devices (1.2, 1.3). With this configuration, a drive of the following processing devices (1.2, 1.3) is achieved with respect to the preceding processing device (1.1), regardless of the synchronisation errors that would affect the very preceding processing device (1.1).

## Claims

1. - A synchronised drive method for at least one processing device (1, 1.1, 1.2, 1.3) of a substrate (S) that is displaced by a means of transport (10, 11, 12), comprising:
- obtaining a position signal (*s̅*₀) by means of an encoder (3), said signal providing a position associated with the displacement of the substrate (S) and/or means of transport (10, 11, 12) at each instant; and
- driving a processing device (1; 1.1, 1.2, 1.3) when the position from a positioning point (Pp) through which the substrate (S) passes, said position provided by the position signal (*s̅*₀), takes a given drive position value (*V*₀);
**characterised in that** it comprises:
- measuring, and/or obtaining data on, physical and/or kinematic characteristics of the substrate (S) and/or of the means of transport (10, 11, 12) related to displacement; and
- correcting the position signal (*s̅*₀; *s̅*; *s̅'; s̅_{A}, s̅_{B}, s̅_̅{̅C̅}̅*) and/or the drive position value (*V*₀; *V; V'; V_{A}, V_{B}, V_{C}*), based on the measurement or data obtained, to drive the processing device (1; 1.1, 1.2, 1.3).

2. - The synchronised drive method according to the preceding claim, **characterised in that** it comprises obtaining a variation (Δ) in the position between a previous point of passage (Pa; Par) and a subsequent point of passage (Ps), said position provided by the uncorrected position signal (*s̅*₀), by detecting the passage of a reference element (R; Q, Q'), fixed to the substrate (S) and/or to the means of transport (10, 11, 12), through said points of passage (Pa, Par; Ps), so that the correction of the position signal (*s̅*₀; *s̅*; *s̅'; s̅_{A}, s̅_{B}, s̅_̅{̅C̅}̅*) and/or the drive position value (*V*₀; *V; V'; V_{A}, V_{B}, V_{C}*) is carried out based on said variation (Δ).

3. - The synchronised drive method according to claim 2, **characterised in that** it comprises obtaining a difference (δ; δ', δ") between a reference variation value (Δo) of the position between the points of passage (Pa, Par; Ps) and the variation (Δ) in the measured position, such that the corrected position signal (*s̅*; *s̅'; s̅_{A}, s̅_{B}, s̅_{C}*) is obtained by adding the difference (δ; δ', δ") to the uncorrected position signal (*s̅*₀) and/or the corrected drive position value (*V*; *V'*; *V_{A}, V_{B}, V_{C}*) is obtained by subtracting the difference (δ; δ', δ") from the uncorrected drive position value (*V*₀).

4. - The synchronised drive method according to one of claims 2 or 3, **characterised in that** the substrate (S) and/or the means of transport (10, 11, 12) comprise a plurality of reference elements (R; Q, Q'), in particular the reference element (Q; Q') is part of a reference pattern (Q, Q').

5. - The synchronised drive method according to one of claims 2 to 4, **characterised in that** the previous point of passage (Pa; Par) is arranged substantially close to or not distant from the positioning point (Pp) and/or the subsequent point of passage (Ps) is arranged substantially close to or not distant from the processing device (1; 1.1, 1.2, 1.3).

6. - The synchronised drive method according to one of claims 2 to 5, **characterised in that** the previous point of passage (Pa; Par) is arranged after the positioning point (Pp) and/or the subsequent point of passage (Ps) is arranged before the processing device (1; 1.1, 1.2, 1.3).

7. - The synchronised drive method according to one of claims 2 to 6, **characterised in that** the previous point of passage (Pa; Par) is arranged substantially close to or not distant from a preceding processing device (1.1) to at least one processing device (1.2; 1.3), more particularly, it is arranged before said preceding processing device (1.1).

8. - The synchronised drive method according to one of claims 2 to 7, **characterised in that** a plurality of consecutive processing devices (1.1, 1.2, 1.3) are associated with a single pair of points of passage (Pa, Ps), so that said processing devices (1.1, 1.2, 1.3) are driven either by means of a common corrected position signal (*s̅*') and/or a common corrected drive position value (*V*'), or by means of respective corrected position signals (*s̅_{A}, s̅_{B}, s̅_{C}*) and/or respective corrected drive position values (*V_{A}, V_{B}, V_{C}*), in particular, the processing devices (1.1, 1.2, 1.3) being arranged between the points of passage (Pa, Ps).

9. - The synchronised drive method according to one of claims 2 to 7, **characterised in that** a plurality of consecutive processing devices (1.2, 1.3) are associated with respective pairs of points of passage (Par, Ps'; Par, Ps"), in which the previous point of passage (Par) and/or the subsequent point of passage (Ps', Ps") is shared.

10. - The synchronised drive method according to one of the preceding claims, **characterised in that** it comprises storing data associated with the measurement, in particular, storing the position associated with the displacement, the variation (Δ) and/or the difference (δ; δ', δ"), for different substrates (S) and/or for different reference elements (R; Q, Q') of the substrate (S) or of the means of transport (10, 11, 12), so that the correction of the position signal (*s̅*₀; *s̅*; *s̅'; s̅_{A}, s̅_{B}, s̅_{C}*) and/or of the drive position value (*V*₀; *V; V'; V_{A}, V_{B}, V_{C}*) is carried out based on a selection of said data, in particular, by means of a FIFO method.

11. - The synchronised drive method according to one of the preceding claims, **characterised in that** the uncorrected position signal (*s̅*₀) and corrected position signal (9) are pulse signals, in particular the position associated with the displacement, the variation (Δ) and/or the difference (δ; δ', δ") obtained by counting the number of pulses (p, p') of the signal (*s̅*₀, *s̅*).

12. - The synchronised drive method according to claim 11, **characterised in that** the corrected position signal (*s̅*) is obtained by introducing or suppressing pulses (p, p') in the uncorrected position signal (*s̅*₀).

13. The synchronised drive method according to one of the preceding claims, **characterised in that** the processing devices (1; 1.1, 1.2, 1.3) are digital inkjet printing devices (1; 1.1, 1.2, 1.3) that are part of an inkjet printer (20), in particular a single-pass inkjet printer, each digital printing device (1.1, 1.2, 1.3) comprising a plurality of print heads (21), each print head (21) having a plurality of ink ejection nozzles (22) arranged aligned along a direction perpendicular to the displacement, in particular the digital printing devices (1.1, 1.2, 1.3) being configured to eject drops with a volume less than or equal to 20 pL, preferably 10 pL, more preferably 5 pL, and/or to provide print resolution in the direction perpendicular to displacement greater than or equal to 360 dpi, preferably 720 dpi, more preferably 1200 dpi.

14. - A synchronised drive system for at least one processing device (1; 1.1, 1.2, 1.3) of a substrate (S) that is displaced relative to the devices (1; 1.1, 1.2, 1.3) by a means of transport (10, 11, 12), **characterised in that** the system is configured to perform a synchronised drive method according to one of the preceding claims, comprising:
- means for measuring, and/or obtaining data on, physical and/or kinematic characteristics of the substrate (S) and/or of the means of transport (10, 11, 12) related to displacement, in particular, comprising at least one detection sensor (2; 2.1, 2.2; 2.3; 2.4; 2.5, 2.6; 2.7, 2.8, 2.9) for detecting the passage of a reference element (R; Q; Q') fixed to the substrate (S) and/or to the means of transport (10, 11, 12), a measurement sensor (7), in particular a speed sensor, for the substrate (S) and/or for the means of transport (10, 11, 12), and/or a data log (6); and
- a control device (4, 5, 8, 9, 9'; 5.1-5.3; 8.1, 8.2) that is operationally connected to an encoder (3) to obtain a position signal (*s̅*₀), to means for detecting the passage of the substrates (S) through a positioning point (Pp), to the means for measuring, and/or obtaining data on, physical and/or kinematic characteristics of the substrate (S) and/or of the means of transport (10, 11, 12) related to the displacement, and to the processing devices (1; 1.1, 1.2, 1.3).

15. - A digital printing machine for substrates (S), comprising:
- an inkjet printer (20), in particular a single-pass inkjet printer, comprising a plurality of digital printing devices (1.1, 1.2, 1.3);
- a means of transport (10, 11, 12) to displace the substrates (S) to be printed by the inkjet printer (20);
- an encoder (3) to obtain a position signal (*s̅*₀), which provides a position associated with the displacement of the substrate (S) and/or means of transport (10, 11, 12) at each instant; and
- means for detecting the passage of the substrates (S) through a positioning point (Pp), in particular, comprising a detection sensor (2) for detecting the passage through the positioning point (Pp) of a reference element (R) fixed to the substrate (S);
**characterised in that** it comprises a synchronised drive system according to the preceding claim, for the synchronised drive of the digital printing devices (1.1, 1.2, 1.3) of the substrates (S) as they are displaced by the means of transport (10, 11, 12).
